# EUROPÄISCHE PATENTSCHRIFT

(11) **EP 2 404 375 B1**
(45) Veröffentlichungstag und Bekanntmachung des Hinweises auf die Patenterteilung: **15.05.2013**
(21) Anmeldenummer: 10709459.1
(22) Anmeldetag: 02.03.2010
(51) Int. Cl.: H02P 3/22, H02P 25/14

(54) **ELEKTRODYNAMISCHE BREMSEINRICHTUNG FÜR EINEN UNIVERSALMOTOR**
ELECTRODYNAMIC BRAKING DEVICE FOR A UNIVERSAL MOTOR
DISPOSITIF DE FREINAGE ÉLECTRODYNAMIQUE POUR UN MOTEUR UNIVERSEL

(30) Priorität: 21.04.2009 DE 102009018238; 03.03.2009 DE 102009011448
(43) Veröffentlichungstag der Anmeldung: 11.01.2012
(73) Patentinhaber: Robert Bosch GmbH, 70442 Stuttgart (DE)
(72) Erfinder: ROTTMERHUSEN, Hermann, 25782 Tellingstedt (DE)
(86) Internationale Anmeldenummer: PCT/EP2010/052624
(87) Internationale Veröffentlichungsnummer: WO 2010/105903

(56) Entgegenhaltungen:
- EP-A2- 1 044 921
- EP-A2- 1 385 261
- US-B1- 6 236 173

## Beschreibung

Die Erfindung bezieht sich auf eine elektrodynamische Bremseinrichtung für einen Universalmotor, gemäß dem Patentanspruch 1 und ein Verfahren zum Bremsen eines Universalmotors gemäß Patentanspruch 15.

Elektrodynamische Bremseinrichtungen sind in unterschiedlichen Auslegungen bekannt.

DE 38 25 835 A1 beschreibt eine elektrische Bremsvorrichtung für einen Reihenschlussmotor, mit einer Feldwicklung und einem Anker und mit einer Schaltungsanordnung mit einer Phasenanschnittsteuerung, wobei während des Bremsbetriebes die Feldwicklung aus dem Netz gespeichert wird, und der Anker kurzgeschlossen ist.

Die Bremsvorrichtung ist für eine Zentrifuge bestimmt, womit das Bremsdrehmoment über den gesamten Drehzahlbereich konstant gehalten werden soll. Das Bremsdrehmoment wird durch eine drehzahlabhängige Steuereinrichtung gesteuert, wobei in der Erregerwicklung des Elektromotors ein Strom erzeugt wird, der eine umgekehrte Proportionalität zur Drehzahl des Elektromotors aufweist. Außerdem ist och ein Bremswiderstand während des Bremsbetriebes mit dem Anker in Reihe geschaltet.

DE 102 34 397 A1 beschreibt einen gebremsten Reihenschlussmotor und ein Verfahren zum Bremsen des Reihenschlussmotors, wonach der Reihenschlussmotor im Motorbetrieb als herkömmlicher Reihenschlussmotor betrieben wird, wobei Mittel zum Umschalten in den Bremsbetrieb eine Überbrückung des Ankers und eine Fremderregung einer Feldwicklung durch die Versorgungsspannung erlauben, so dass der Motor zum Bremsen als fremderregter Gleichstromgenerator betrieben wird.

DE 199 32 742 C1 zeigt eine weitere Bremsvorrichtung.

Die Aufgabe der Erfindung besteht darin, eine verbesserte elektrodynamische Bremseinrichtung und ein verbessertes Verfahren zum Bremsen eines Motors, insbesondere für einen Universalmotor, bereitzustellen.

Die Aufgabe der Erfindung wird durch die elektrodynamische Bremseinrichtung gemäß Patentanspruch 1 und das Verfahren gemäß Patentanspruch 15 gelöst. Ein Vorteil der Bremseinrichtung und des Verfahrens besteht darin, dass eine verbesserte Bremsung des Ankers erreicht wird, mit der die elektrischen Kontakte geschont werden.

Dies wird dadurch erreicht, dass die Frequenz des Bremsstroms in einer Anfangsphase des Bremsbetriebs höher ist als in einer weiteren Phase des Bremsbetriebs. Auf diese Weise wird eine schonende und schnelle Abbremsung des Ankers erreicht. Vorzugsweise wird in der Anfangsphase des Bremsbetriebs die Feldwicklung mit der Wechselspannung der Frequenz des Stromnetzes versorgt. In einer anschließenden weiteren Phase wird die Feldwicklung mit einer Wechselspannung versorgt, die eine geringere Frequenz als die Wechselspannung der Anfangsphase aufweist.

In den abhängigen Ansprüchen sind vorteilhafte Weiterbildungen der elektrodynamischen Bremseinrichtung bzw. des Verfahrens zum Bremsen angegeben.

Die Vorteile der Erfindung werden u.a. darin gesehen, dass ohne eine Umpolung der Feldwicklung oder des Ankers eine sanfte Schnellbremsung des Universalmotors bei einer guten Bürstenstandzeit erzielt wird. Der Anker ist während des Bremsbetriebs kurz geschlossen und die Feldwicklung ist durch eine spezielle Ansteuerung während des Bremsbetriebs aus dem Netz, d.h. dem Stromnetz, erregt. Die sanfte Schnellbremsung wird mit Hilfe einer einfachen Schaltung und einem besonderen Steuerverfahren erreicht, wodurch die elektrodynamische Bremseinrichtung kostengünstig herzustellen ist.

Die Erfindung hat weiterhin den Vorteil, dass das Bürstenfeuer am Kollektor des Ankers reduziert wird, womit ein schädlicher Aufbau eines erhöhten Lichtbogens am Kollektor reduziert bzw. unterbunden wird.

In einer Weiterbildung der Bremseinrichtung weist die Bremseinrichtung eine Einrichtung auf, die ausgebildet ist, um in der weiteren Phase die Feldwicklung mit Halbwellenpaketen von jeweils mehreren Spannungspulsen gleicher Polarität zu versorgen, wobei die Polarität der Spannungspulse von Halbwellenpaket zu Halbwellenpaket wechselt. Damit wird auf einfache Weise eine Versorgung der Feldwicklung mit einer Wechselspannung mit geringerer Frequenz als der Netzfrequenz erreicht.

In einer weiteren Ausführungsform ist die Einrichtung ausgebildet, um die Spannungspulse des wenigstens ersten Halbwellenpaketes ohne Strombegrenzung an die Feldwicklung anzulegen. Auf diese Weise wird eine kostengünstige Ausführung der Bremseinrichtung erreicht.

In einer weiteren Ausführungsform ist die Einrichtung ausgebildet, den Strom der Spannungspulse der Halbwellenpakete abhängig von vorgegebenen Parametern zu steuern. Auf diese Weise wird eine verbesserte Abbremsung erreicht. Insbesondere kann als Parameter ein vorgegebener Strom durch die Feldwicklung und/oder eine vorgegebene Drehzahl des Motors verwendet werden.

In einer weiteren Ausführungsform ist die Einrichtung ausgebildet, den Strom der Spannungspulse in wenigstens einem Halbwellenpaket in zeitlich nacheinander folgenden Spannungspulsen von Spannungspuls zu Spannungspuls zu senken. Auf diese Weise wird eine schnelle Abbremsung am Ende des Bremsbetriebs erreicht, ohne die Kontakte des Ankers zu sehr zu beanspruchen.

In einer weiteren Ausführungsform ist die Einrichtung ausgebildet, um den Strom durch die Feldwicklung während der Anfangsphase des Bremsbetriebs anhand einer Strom-Sollwertkurve insbesondere mit einer Phasenanschnittswinkelkurve zu steuern oder zu regeln. Auf diese Weise wird eine präzise Anpassung des Stromes an eine gewünschte Strom-Sollwertkurve erreicht. Die Beeinflussung des Strom-Sollwertes mit Hilfe einer Phasenanschnittswinkelkurve stellt eine einfache und kostengünstige Umsetzung dar.

In einer weiteren Ausführungsform ist die Einrichtung ausgebildet, um das Umschalten vom Motorbetrieb zum Bremsbetrieb in der Weise durchzuführen, dass ein Nulldurchgang der Wechselspannung des Stromnetzes während des Umschaltens erfolgt, so dass eine erste Halbwelle des Bremsbetriebs eine entgegen gesetzte Polarität wie eine letzte Halbwelle des Motorbetriebes aufweist. Auf diese Weise wird zusätzlich der Verschleiß der Kontakte begrenzt.

In einer weiteren Ausführungsform ist die Einrichtung ausgebildet, um bei aufeinanderfolgenden Bremsbetrieben die Polarität der ersten Halbwelle des Bremsbetriebes zu wechseln. Auch diese Maßnahme reduziert die Beanspruchung der Bürsten des Kollektors.

In einer weiteren Ausführungsform ist die Einrichtung ausgebildet, um in der Anfangsphase des Bremsbetriebes wenigstens zwei Abschnitte mit unterschiedlich hohen Strömen durch die Feldwicklung einzustellen. Auf diese Weise wird eine sanfte Abbremsung des Ankers erreicht.

In einer weiteren Ausführungsform ist die Einrichtung ausgebildet, um in einem ersten Abschnitt der Anfangsphase einen mit der Zeit leicht ansteigenden Strom durch die Feldwicklung einzustellen, um in einem folgenden zweiten Abschnitt einen mit der Zeit stärker als im ersten Abschnitt ansteigenden Strom durch die Feldwicklung einzustellen, um in einem folgenden dritten Abschnitt der Anfangsphase einen stärker als im zweiten Abschnitt ansteigenden Strom durch die Feldwicklung einzustellen, um vorzugsweise eine geradlinig abfallende Drehzahlkurve des Ankers zu erreichen. Versuche haben gezeigt, dass mit Hilfe dieser Vorgehensweise ein sanftes Abbremsen des Motors erreicht wird.

In einer weiteren Ausführungsform ist die Einrichtung zum Erkennen eines Motorbetriebes oder eines Bremsbetriebes über eine Erkennungsverbindung zu einem Umschaltglied verbunden. Mit Hilfe der Erkennungsverbindung kann eine elektrisch leitende Verbindung zwischen dem Anker und der Feldwicklung und dem Anker und/oder der Feldwicklung und dem Stromnetz hergestellt oder unterbrochen werden. Mit Hilfe der Erkennungsverbindung kann die Einrichtung sicher einen Motorbetrieb oder einen Bremsbetrieb erkennen.

In einer weiteren Ausführungsform weist die Einrichtung wenigstens einen Schalter, insbesondere ein Umschaltglied, auf, mit dem eine elektrisch leitende Verbindung zwischen den Anschlüssen des Ankers und/oder zwischen dem Anker und der Feldwicklung und/oder zwischen dem Anker und/oder der Feldwicklung und Anschlüssen des Stromnetzes hergestellt oder unterbrochen werden kann, um von den Motorbetrieb in den Bremsbetrieb zu schalten, wobei die Schalter eine Schaltverzögerung von mindestens einer Halbwelle der Wechselspannung des Stromnetzes aufweist. Auf diese Weise kann eine sichere und zuverlässige Umschaltung zwischen dem Motorbetrieb und dem Bremsbetrieb erfolgen.

In einer weiteren Ausführungsform weist die Einrichtung eine Steuerelektronik auf, wobei die Steuerelektronik über einen Erkennungsanschluss während des Motorbetriebes über ein Umschaltglied direkt mit einem Netzanschluss verbunden ist, oder über ein Umschaltglied und der Feldwicklung mit einem Netzanschluss verbunden ist, wobei der Anker nach einem Umschalten vom Motorbetrieb in den Bremsbetrieb durch zwei Umschaltglieder beidseitig vom Stromnetz getrennt ist und wobei nach dem Beenden des Bremsbetriebes die Feldwicklung durch einen weiteren Schalter vom Stromnetz getrennt wird. Auf diese Weise kann eine sichere und zuverlässige Umschaltung zwischen Motorbetrieb, Bremsbetrieb und endgültigem Trennen des Motors vom Stromnetz erreicht werden.

In einer weiteren Ausführungsform sind für eine beidseitige mechanische Trennung des Ankers drei weitere Schalter vorgesehen, wobei ein erster Schalter während des Motorbetriebs über einen ersten Umschalter in Reihe mit dem Universalmotor geschaltet ist, wobei ein zweiter Schalter während des Bremsbetriebes über einen zweiten Umschalter in Reihe mit der Feldwicklung geschaltet ist, und wobei ein dritter Schalter in einer Kurzschlussbrücke zwischen den Anschlüssen des Ankers geschaltet ist.

Die Schalter können beispielsweise in Form von steuerbaren Stromschaltern, wie z. B. Triacs oder andere Arten von steuerbaren Schaltern, ausgebildet sein. Die Schalter werden von der Steuerelektronik geschaltet.

Die Erfindung wird nachstehend anhand der Zeichnung näher erläutert.

Dabei zeigt:
- Fig. 1 bis 4: Schaltungsanordnungen der elektrodynamischen Bremseinrichtung für einen Universalmotor,
- Fig. 5 bis 10: sinnbildliche grafische Darstellungen, Diagramme und Aufzeichnungen über einen Strom-Spannungsverlauf in der Feldwicklung während des Bremsbetriebes,
- Fig. 11 bis 13: weitere Schaltungsanordnungen der Bremseinrichtungen.

Elektrohandwerkzeuge, die mit einem gefährlichen Werkzeug bestückt sind, wie Handkreissägen und Winkelschleifer, werden bislang mit einer mechanischen Bremse oder mit einer elektronischen Bremseinrichtung gebremst.

Eine mechanische Bremse hat im besonderen den Nachteil, dass eine solche Bremse einem nicht unerheblichen Verschleiß unterworfen ist, und sie ist somit wartungsbedürftig, und bei den bislang bekannten elektronischen Bremseinrichtungen besteht ein erheblicher Nachteil darin, dass bei den üblicherweise zur Anwendung kommenden Universalmotoren die Bürsten und der Kollektor während des Bremsbetriebes einem hohen Verschleiß unterworfen sind.

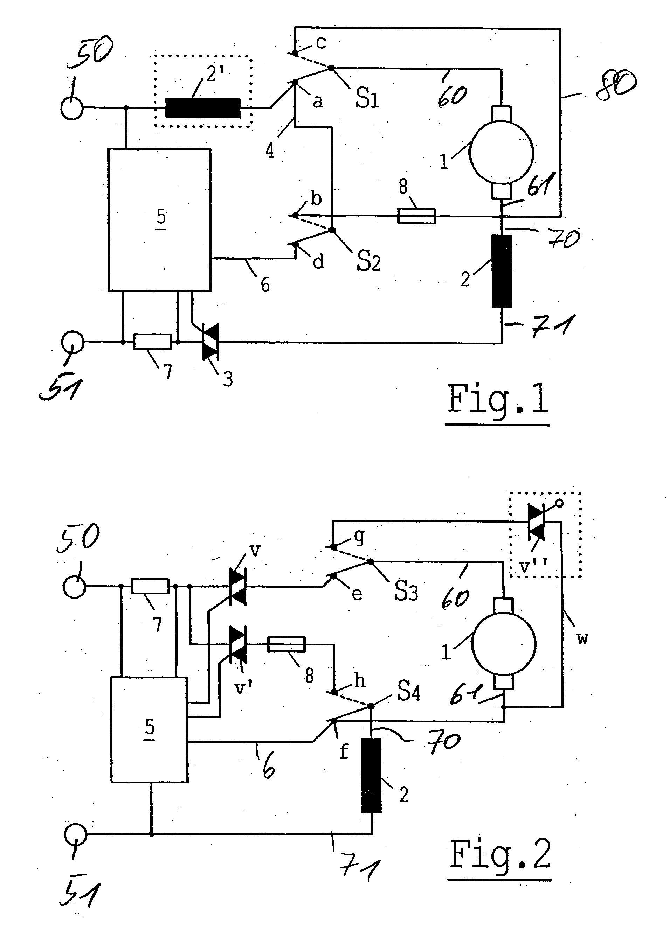

Die Fig. 1 bis 4 zeigen jeweils eine Schaltungsanordnung für einen Universalmotor, mit der eine netzabhängige Kurzschlussbremsung durchführbar ist, ohne dass die Bürsten einem nennenswerten Verschleiß unterliegen.

Fig. 1 zeigt eine Schaltungsanordnung, bei der ein erster Netzanschluss 50 des Stromnetzes zum Motorbetriebskontakt a eines ersten Umschaltgliedes S1 führt, und ein erster Anschluss 60 eines Ankers 1 ist mit dem ersten Umschaltglied S1 verbunden, und ein zweiter Anschluss 61 des Ankers 1 ist mit einem ersten Anschluss einer Feldwicklung 2 verbunden, und ein Schalter in Form eines Triacs 3 ist zwischen einem zweiten Anschluss der Feldwicklung und einem zweiten Netzanschluss 51 geschaltet. Der zweite Anschluss 61 des Ankers 1 und der erste Anschluss 70 der Feldwicklung 2 ist mit einem Bremsbetriebskontakt b eines zweiten Umschaltgliedes S2 und mit einem Bremsbetriebskontakt c des ersten Umschaltgliedes S1 verbunden, wobei das zweite Umschaltglied S2 über eine Brücke 4 mit dem Motorbetriebskontakt a des ersten Umschaltgliedes S1 verbunden ist. Der Bremsbetriebskontakt c ist über eine weitere elektrische Leitung 80 mit der Verbindungsleitung von Anker 1 und Feldwicklung 2 verbunden. Ein Erkennungskontakt d des zweiten Umschaltgliedes S2 ist mit einer Steuerelektronik 5 durch eine Leitung 6 verbunden. Die Umschaltglieder S1, S2, die beispielsweise durch einen Schalter oder Taster betätigt werden, besitzen vorzugsweise eine Schaltverzögerung von einer Zeit einer Halbwelle der Wechselspannung des Stromnetzes, damit ein sicheres Umschalten vom Motorbetrieb in den Bremsbetrieb gewährleistet ist.

Der Anker 1 ist hier einseitig mit der Feldwicklung 2 in Reihe geschaltet. Der Anker kann auch zwischen zwei Wicklungen der Feldwicklung geschaltet sein, wobei dann ein zweiter Feldwicklungsteil 2' direkt mit dem ersten Netzanschluss 50 verbunden ist.

Für einen geregelten Bremsbetrieb ist ein Shunt 7 vorgesehen, der zwischen dem Triac 3 und dem zweiten Netzanschluss angeordnet ist, und für den Fall des Versagens der elektronischen Einrichtung kann eine Sicherung 8 während des Bremsbetriebes mit der Feldwicklung 2 in Reihe geschaltet sein.

Die Schaltungsanordnung der Fig. 1 kann auch lediglich nur mit dem zweiten Umschaltglied S2 versehen sein, wobei dann der Universalmotor einseitig direkt mit dem Netz verbunden ist, und somit das erste Umschaltglied S1 nicht benötigt wird. Aus Sicherheitsgründen ist dann die Sicherung 8 in Reihe mit dem Universalmotor geschaltet.

Die Funktionsweise der elektrodynamischen Bremseinrichtung ist die Folgende. Soll der Motorbetrieb eingeleitet werden, so wird ein Geräteschalter, der mit den Umschaltern in Wirkverbindung steht, in der Weise betätigt, dass das erste Umschaltglied S1 zum Motorbetriebskontakt a und das zweite Umschaltglied S2 zum Erkennungskontakt d geschlossen. Bei dieser Schaltstellung der Umschaltglieder ist der Universalmotor für den Motorbetrieb aktiviert und läuft vorzugsweise über einen Sanftanlauf hoch, der von der Steuerelektronik 5 über den Triac 3 gesteuert wird. Die Steuerelektronik 5 weist ein Programm, beispielsweise einen Controller, auf, mit dem der Motorbetrieb und der Bremsbetrieb gesteuert wird.

Wird der Motor über die Betätigung des Geräteschalters abgeschaltet, so wird das erste Umschaltglied S1 zum Bremsbetriebskontakt c, und das zweite Umschaltglied S2 zum Bremsbetriebskontakt b geschlossen. Der zweite Anschluss 71 der Feldwicklung 2 ist nun direkt über den Triac 3 mit dem zweiten Netzanschluss 51 verbunden, und der Anker 1 ist über den Bremsbetriebskontakt c des ersten Umschaltgliedes S1 und über die Leitung 80 kurzgeschlossen. Das Öffnen des Erkennungskontaktes d des zweiten Umschaltgliedes S2 wird mittels eines Controllers der Steuerelektronik 5 erkannt und es wird ein Programm für den Bremsbetrieb aktiviert, womit die Steuerelektronik 5 den Triac 3 derart ansteuert, dass ein in der Höhe vorbestimmter Strom über die Feldwicklung 2 fließt. Anstelle eines Triacs kann auch eine andere Art von steuerbarem Schalter vorgesehen sein. Durch ein anliegendes Feld am Ständer wird der rotierende kurzgeschlossene Anker 1 entsprechend erregt. Die Feldwicklung 2 wird derart mittels des Programms der Steuerelektronik 5 mit einer Spannung beaufschlagt, womit ein geringes Bürstenfeuer erzielt, und eine effektive Bremsung erreicht ist. Dazu stehen der Steuerelektronik 5 entsprechende Zeitverläufe für die Spannung zur Verfügung. Die Spannung wird von der Netzspannung des Stromnetzes 50, 51 erzeugt.

Soll ein sicheres Umschalten vom Motorbetrieb in den Bremsbetrieb mit einem Geräteschalter mit nicht verzögerten Umschaltgliedern erfolgen, und hierbei der Anker beidseitig mechanisch vom Netz getrennt sein, so sind hierfür drei steuerbare Schalter, beispielsweise Triacs erforderlich.

Fig. 2 zeigt eine solche Lösung. Ein erster Triac v ist mit dem ersten Netzanschluss 50 und mit einem Motorbetriebskontakt e eines ersten Umschaltgliedes S3 verbunden, und der erste Anschluss 60 des Ankers 1 führt zum ersten Umschaltglied S3, wobei der zweite Anschluss 61 des Ankers mit einem Erkennungskontakt f eines zweiten Umschaltgliedes S4, und mit einem Bremsbetriebskontakt g des ersten Umschaltgliedes S3 verbunden ist, wobei der Erkennungskontakt f auch gleichzeitig ein Motorbetriebskontakt ist. Der erste Anschluss 70 der Feldwicklung 2 ist mit dem zweiten Umschaltglied S4 verbunden, und der zweite Anschluss 71 der Feldwicklung ist am zweiten Netzanschluss 51 angeschlossen, wobei ein zweiter Triac v' mit einem Bremsbetriebskontakt h des zweiten Umschaltgliedes S4, und mit dem ersten Netzanschluss 50 verbunden ist. Zudem ist der zweite Anschluss 61 des Ankers 1 über eine Brücke W und einen dritten Triac v" mit dem Bremsbetriebskontakt g des ersten Umschaltgliedes S3 verbunden. Die Steuerelektronik 5 ist über die Leitung 6 mit dem Erkennungskontakt f verbunden. Anstelle der drei Triacs können auch andere Arten von steuerbaren Schaltern vorgesehen sein. Die drei Triacs werden von der Steuerelektronik 5 gesteuert.

Mit dieser Schaltungsanordnung ist der Anker während des Bremsbetriebes und in der Ausschaltstellung des Motorbetriebes beidseitig durch die Umschaltglieder S3, S4 mechanisch vom Netz getrennt. Ein sicheres Umschalten vom Motorbetrieb in den Bremsbetrieb ist hiermit auch nicht gewährleistet, da die letzte Halbwelle des Netzes des Motorbetriebes über einen Lichtbogen an den Kontakten der Umschaltglieder und über die Kurzschlussbrücke w des Ankers direkt über die Feldwicklung fließen kann, und somit der erste Triac v bis zum nächsten Nulldurchgang leitend bleibt, womit ein hoher Stromfluss über die Feldwicklung verursacht wird, der einen erheblichen Lichtbogen am Kollektor des kurzgeschlossenen Ankers bewirkt, und dieser hohe Stromfluss über die Feldwicklung auch einen Netzsicherung auslösen kann. Ein Lichtbogen an den Schaltkontakten des Geräteschalters erlischt erst beim nächsten Nulldurchgang einer Wechselspannung.

Um zu verhindern, dass während des Umschaltens in den Bremsbetrieb die letzte Halbwelle des Motorbetriebes direkt über die Feldwicklung fließen kann, ist hierfür der dritte Triac vorgesehen. Dieser Triac v" ist in die Kurzschlussbrücke w des Ankers geschaltet.

Aus der Schaltungsanordnung der Fig. 2 geht hervor, dass nach einem Umschalten vom Motorbetrieb in den Bremsbetrieb der Anker 1 durch die zwei Umschaltglieder S3, S4 an beiden Seiten vom Netz getrennt ist, und die Feldwicklung 2 nach dem Beenden des Bremsbetriebes durch den zweiten Triac v' vom Netz getrennt ist. Im Motorbetrieb ist das erste Umschaltglied S3 mit dem Motorbetriebskontakt e und das zweite Umschaltglied S4 mit dem Erkennungskontakt f verbunden. Im Bremsbetrieb ist das erste Umschaltglied S3 mit dem Bremsbetriebskontakt g und das zweite Umschaltglied S4 mit dem weiteren Bremsbetriebskontakt h verbunden. Eine komplette Trennung des Ankers 1 vom Netz nach dem Umschalten in den Bremsbetrieb kann auch erfolgen, wenn nur ein Triac angeordnet ist. Erforderlich ist hierfür ein zweipoliger Umschalter mit verzögerten Umschaltgliedern von mindestens der Zeit einer Halbwelle der Wechselspannung des Stromnetzes, das durch die Netzanschlüsse 50, 51 bereitgestellt wird.

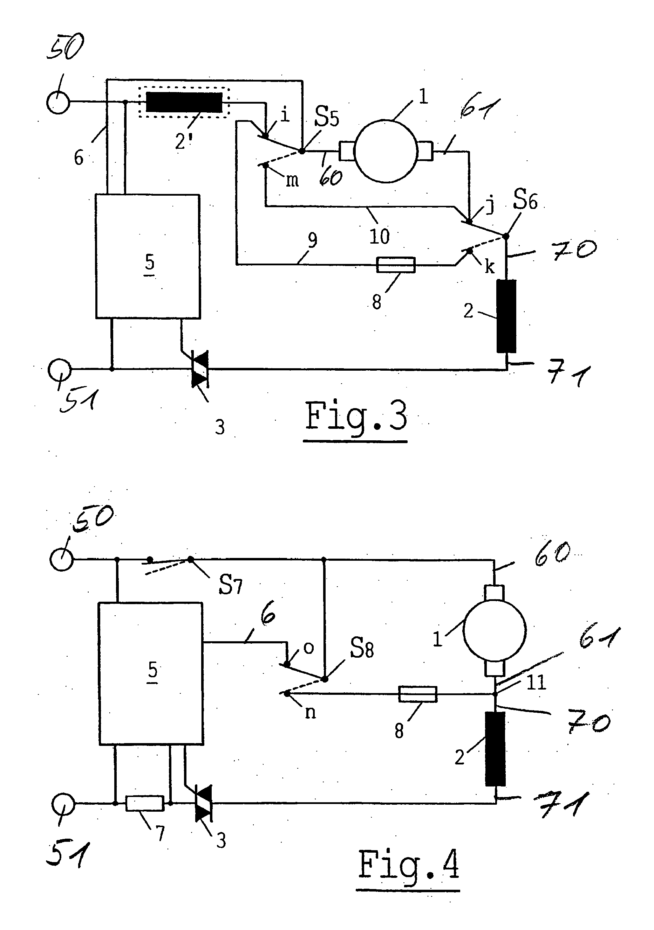

Fig. 3 zeigt eine solche Lösung. Der erste Netzanschluss 50 führt zum Motorbetriebskontakt i des ersten Umschaltgliedes S5, und der erste Anschluss 60 des Ankers 1 ist mit dem ersten Umschaltglied S5 verbunden, wobei der zweite Anschluss 61 des Ankers 1 mit dem Motorbetriebskontakt j des zweiten Umschaltgliedes S6 verbunden ist. Der erste Anschluss 70 der Feldwicklung 2 ist mit dem zweiten Umschaltglied S6 verbunden. Der zweite Anschluss 71 der Feldwicklung ist über den Triac 3 zum zweiten Netzanschluss 51 geführt. Der Bremsbetriebskontakt k des zweiten Umschaltgliedes S6 ist über eine Brücke 9 mit dem Motorbetriebskontakt i des ersten Umschaltgliedes S5 verbunden, und der Motorbetriebskontakt j des zweiten Umschaltgliedes S6 ist über eine zweite Brücke 10 mit dem Bremsbetriebskontakt m des ersten Umschaltgliedes S5 verbunden. Die Anschlussleitung 6 der Steuerelektronik 5 zur Erkennung der Schalterstellung ist hier am Umschaltglied S5 angeschlossen.

Der Anker 1 ist einseitig mit der Feldwicklung 2 in Reihe geschaltet, oder der Anker ist zwischen zwei Feldwicklungen geschaltet, wobei dann das zweite Feldwicklungsteil 2' direkt mit dem ersten Netzanschluss 50 verbunden ist.

Bei den Fig. 1 bis 3 ist die Feldwicklung des Universalmotors in der Ausschaltstellung des Geräteschalters, der die zwei Umschalter 55, 56 umfasst, nur durch einen Triac 3 vom Netz getrennt. Eine größere Betriebssicherheit ist dadurch gewährleistet, wenn der Universalmotor zusätzlich auch noch mechanisch vom Netz getrennt wird. Dazu kann zusätzlich ein entsprechender Schalter vorgesehen sein.

Fig. 4 zeigt eine solche Lösung, bei der ein Schaltglied S7 den ersten Netzanschluss nach dem Beenden des Bremsbetriebes trennt. Der Anker 1 ist hier einseitig mit der Feldwicklung 2 in Reihe geschaltet, und dem Anker 1 ist ein Umschaltglied S8 parallel geschaltet, wobei das Umschaltglied S8 und der erste Anschluss 60 des Ankers 1 mit dem ersten Netzanschluss 50 verbunden ist, und der Bremsbetriebskontakt n des Umschaltgliedes S8 ist mit dem zweiten Anschluss 61 des Ankers 1 und mit dem ersten Anschluss 70 der Feldwicklung 2 verbunden, und somit am Abgriff 11 angeschlossen, wobei ein Erkennungskontakt o des Umschaltgliedes S8 über eine Leitung 6 mit der Steuerelektronik 5 verbunden ist. Der Triac 3 ist zwischen dem zweiten Anschluss 71 der Feldwicklung 2 und dem zweiten Netzanschluss 51 angeordnet, d.h. dem Motor nachgeschaltet. Auch hier ist für die Regelung des Motors ein Shunt 7, mit dem die Stromstärke des Stromflusses durch die Feldwicklung erfasst werden kann, zwischen dem Triac 3 und dem zweiten Netzanschluss 51 geschaltet. Für die Betriebssicherheit während des Bremsbetriebes ist eine Sicherung 8 vorgesehen, die zwischen dem ersten Anschluss 70 der Feldwicklung 2 und dem Bremsbetriebskontakt u geschaltet ist.

Das Umschaltglied S8 und das Netztrennschaltglied S7 werden beispielsweise von einem Geräteschalter betätigt. Das Umschaltglied S8 besitzt mindestens eine Schaltverzögerung von der Zeit einer Halbwelle der Wechselspannung der Netzversorgung. Das Netztrennschaltglied S7 besitzt eine Schaltverzögerung von mindestens der Zeitdauer des Bremsbetriebes, d.h. das Netztrennschaltglied S7 öffnet erst nach dem Ende des Bremsbetriebes. Das Netztrennschaltglied S7 kann beispielsweise auch von der Steuerelektronik 5 geschaltet werden.

Um bei einem Universalmotor, bei dem während des Bremsbetriebes die Feldwicklung am Netz liegt und die Ankerwicklung kurzgeschlossen ist, eine sanfte Schnellbremsung mit einer elektrodynamischen Bremseinrichtung durchführen zu können, ist ein entsprechendes Programm für den Controller der Steuerelektronik vorgesehen, um den Strom durch die Feldwicklung 2 im Bremsbetrieb über den oder die Triacs zu steuern oder zu regeln. Das Programm ist in einem Speicher abgelegt, auf den die Steuerelektronik zugreifen kann. Der von einem Triac gesteuerte Strom kann durch eine Phasenanschnittsteuerung und/oder durch eine Strombegrenzung gesteuert werden.

Bei einer derartigen Bremseinrichtung muss berücksichtigt werden, dass durch die Bestromung der Feldwicklung 2 mit einer Wechselspannung des Netzes das anliegende Feld am Ständer nicht zeitgleich mit dem induzierten Feld am Anker ist. Die Höhe der Verschiebung ist von vielen Faktoren abhängig. Um eine zeitliche Verschiebung des Feldes am Anker zu kompensieren, werden beispielsweise Bremswiderstände im Bremskreis geschaltet. Ein Bremswiderstand müsste aber variabel steuerbar sein, damit er voll zur Wirkung kommen kann.

Dieser Aufwand kommt aber bei einem Universalmotor für Elektrowerkzeuge im Prinzip nicht zur Anwendung, da der Platzbedarf für eine solche Einrichtung nicht vorhanden, und die Kostenfaktoren hoch sind. Einen annäherungsweisen Gleichlauf des Feldes vom Ständer und Anker soll erfindungsgemäß durch die spezielle Steuerelektronik gelöst werden. Anhand von sinnbildlichen grafischen Darstellungen und eines Diagramms und Aufzeichnungen wird dieses Verfahren näher erläutert.

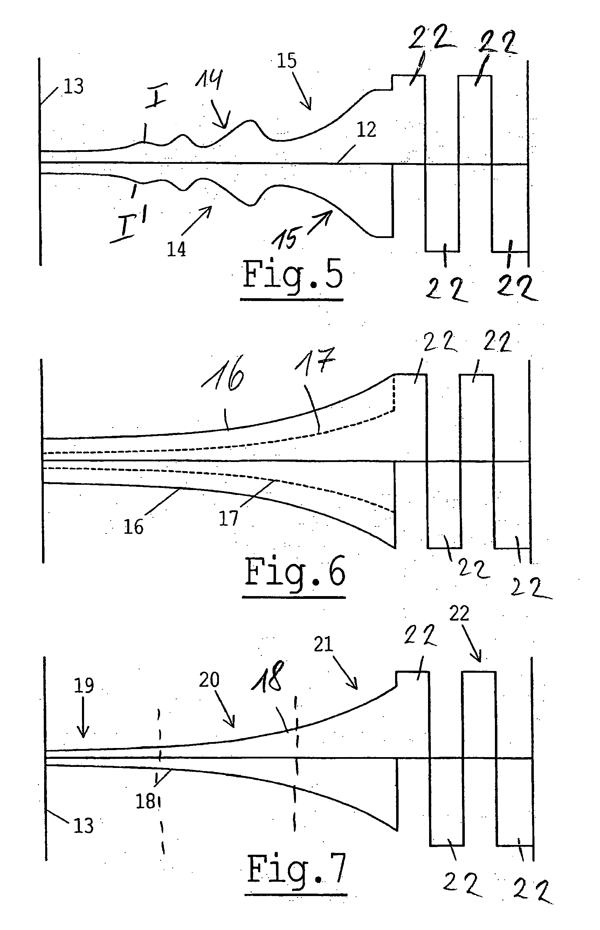

Fig. 5 zeigt eine sinnbildliche Darstellung des Stromverlaufs in der Feldwicklung 2 während des Bremsbetriebes bei einer Ansteuerung des Triacs 3 bzw. der Triacs v, v', v" beginnend mit einer Phasenanschnittsteuerung mit einem großen Zündwinkel und im weiteren Verlauf mit einem kleineren, vorzugsweise kontinuierlich gleichmäßig verkleinerten Zündwinkel. Dazu sind entsprechende Steuertabellen im Speicher abgelegt. Der Nulldurchgang einer Wechselspannung des Netzes ist mit einer durchgehenden Linie 12 dargestellt, und die Höhe der Stromaufnahme der Feldwicklung während des Bremsbetriebes ist jeweils seitlich dieser Linie 12 mit weiteren Linien I, I' dargestellt. Da das Netz eine Wechselspannung mit einem Wechselstrom liefert, sind die positiven und negativen Werte des Wechselstromes angegeben.

Am Anfang 13 des Bremsbetriebes fließt ein geringer Erregerstrom 1, I' über die Feldwicklung, der dann leicht ansteigt und in einem nachfolgenden ersten Bereichsabschnitt 14 steigt und fällt der Erregerstrom wellenförmig, und ein einem nachfolgenden zweiten Bereichsabschnitt 15 steigt der Erregerstrom I, I' kontinuierlich an. Damit am Ende des Bremsbetriebes eine zügige Bremsung erfolgt und der Universalmotor zum Stillstand kommen kann, ist zum Ende des Bremsbetriebes die Feldwicklung mit einem Wechselstrom einer niedrigeren Frequenz wie der Netzfrequenz erregt, und dieser Wechselstrom besteht aus positiven und negativen Halbwellenpaketen 22. Vorzugsweise beträgt die Frequenz der Halbwellenpakete unter 10 Hz.

Ein Auf- und Abschwellen des Erregerstroms in der Feldwicklung verursacht am Kollektor des kurzgeschlossenen Ankers ein erhebliches Bürstenfeuer, und eine Bestromung der Feldwicklung mit Halbwellenpaketen oder mit einem pulsierenden Gleichstrom während der gesamten Bremszeit ist nicht von Vorteil, da der Bürstenverschleiss zu hoch ist.

Fig. 6 zeigt einerseits eine insgesamt zu hohe Stromaufnahme 16 der Feldwicklung während des Bremsbetriebes, und andererseits eine zu niedrige Stromaufnahme 17, gekennzeichnet durch eine Stromkurve 16 und durch eine gestrichelte Stromkurve 17.

Damit stets eine gleiche Stromkurve während des Bremsbetriebes erzielt werden kann, ist eine geregelte Stromaufnahme der Feldwicklung vorgesehen.

Fig. 7 zeigt eine solche geregelte Stromkurve 18, die während eines Bremsbetriebes durch die Feldwicklung 2, 2' fließt. Am Anfang 13 des Bremsbetriebes beginnt die Wechselstromaufnahme der Feldwicklung mit der Netzfrequenz und mit einem fest eingestellten niedrigen Stromwert, und im weiteren Verlauf des Bremsbetriebes in den Bereichsabschnitten 19, 20, 21 wird der Strom durch die Feldwicklung 2 vorzugsweise kontinuierlich bis zum Beginn der Halbwellenpakete 22 erhöht. Die Stromregelung erfolgt über den Shunt 7 der Schaltungsanordnung, der vom Controller der Steuerelektronik 5 ausgewertet wird. Mit dem Programm des Controllers wird der oder die Triacs entsprechend angesteuert, um die gewünschte Stromstärke durch die Feldwicklung fließen zu lassen. Mit Hilfe des Shunts 7 kann auch gleichzeitig das Drehmoment während des Motorbetriebes, bei einer Absenkung der Leerlaufdrehzahl des Universalmotors; geregelt werden. Über den Shunt 7 lassen sich auch gut eine Überlastung des Universalmotors, und eine Blockierung des Elektrowerkzeugs ermitteln. In einem solchen Fall wird die Stromzufuhr zum Universalmotor entsprechend zurückgefahren oder ganz von der Steuerelektronik 5 unterbunden.

Für den Bremsbetrieb ist für den Controller der Steuerelektronik 5 ein entsprechendes Programm und entsprechende Daten abgespeichert, womit eine sanfte Schnellbremsung bei einem geringen Bürstenfeuer erzielt wird.

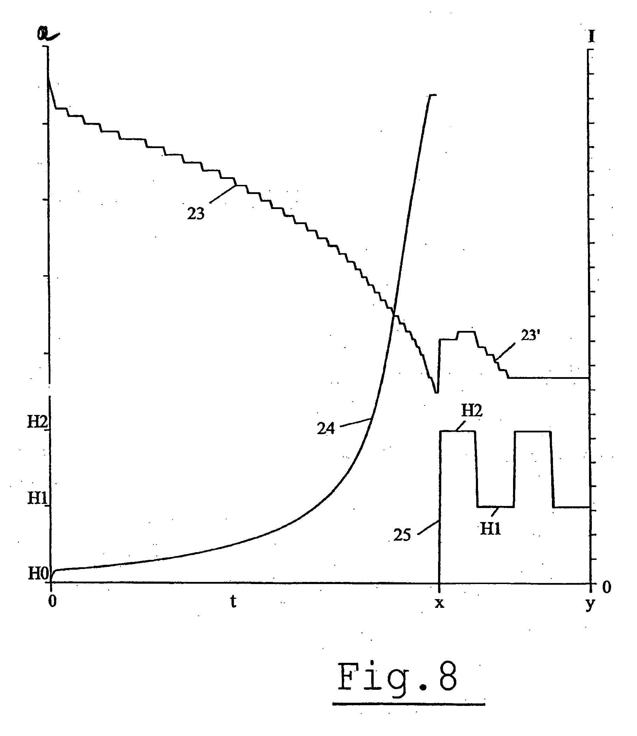

Fig. 8 zeigt ein schematisches Diagramm über die Zeit t mit Steuerkurven und Regeldaten eines Programms des Controllers der Steuerelektronik für den Bremsbetrieb. Eine Tabelle einer Steuerkurve für den Phasenanschnittwinkel α des Bremsbetriebes ist mit einer ersten Phasenanschnittwinkelkurve 23 dargestellt, und die Daten eines Betrages eines Stromsollwertes I sind mit einer Stromsollwertkurve 24 dargestellt, wobei die Phasenanschnittwinkelkurve 23 so gewählt ist, dass die Stromsollwertkurve 24 im Prinzip erreicht ist. Mithilfe der Phasenanschnittwinkelkurve werden die Phasenwinkel a vorgegeben, mit denen der oder die Triacs die Wechselspannung des Netzes anschneiden, um gewünschte Spannungs- und insbesondere Stromverläufe in der Feldwicklung zu erhalten. Abweichungen von der Stromsollwertkurve 24 werden durch einen Stromregler korrigiert, der die Stromstärke vorgibt, die der oder die Triacs im Bremsbetrieb durch die Feldwicklung steuern. Bei entsprechend ausgelegtem Universalmotor kann auf eine Vorgabe einer Stromsollwertkurve verzichtet werden, und während des Bremsbetriebes ist dann nur eine Phasenanschnittwinkelkurve 23 vorgegeben. Die Stromsollwertkurve 23 kann auch ohne die Phasenanschnittwinkelkurve 23 mit dem Stromregler erreicht werden, indem am Anfang der Stromsollwertkurve 24 am Stromregler ein Phasenanschnittwinkel vorgegeben ist. Der Stromregler ist in der Steuerelektronik 5 integriert und ist während des Bremsbetriebes in einer Zeit von 0 bis x (H0) aktiv, wobei die Feldwicklung 2, 2' mit einem Wechselstrom entsprechend der Netzfrequenz beaufschlagt ist. Der Stromregler kann als Programm oder Schaltung ausgebildet sein. Der Stromregler kann zudem dazu dienen, ein Abweichen von der Stromsollwertkurve verursacht durch ein Wegdriften des Ankerfeldes vom Ständerfeld und des Blindstroms des Motors zu korrigieren. Ab einer Zeit von x bis y ist eine Halbwellensteuerung aktiv, und die Feldwicklung ist mit einem Wechselstrom einer niedrigeren Frequenz wie der Netzfrequenz beaufschlagt, entsprechend der Halbwellenpakete H2 und der Halbwellenpakete H1, dargestellt durch eine Halbwellensteuerkurve 25. Die Halbwellenpakte sind hier in Bezug auf den Strom ungeregelt, wobei die Halbwellenpakete auch in der Stromstärke geregelt sein können. Die ersten Halbwellensteuerkurve 25 wird durch eine zweite Phasenanschnittwinkelkurve 23' vorgegeben. Die ersten Halbwellenpakete H2 können positiv sein, wobei dann die zweiten Halbwellenpakete H1 negativ sind, oder die ersten Halbwellenpakete H2 können negativ sein, wobei dann die zweiten Halbwellenpakete H1 positiv sind.

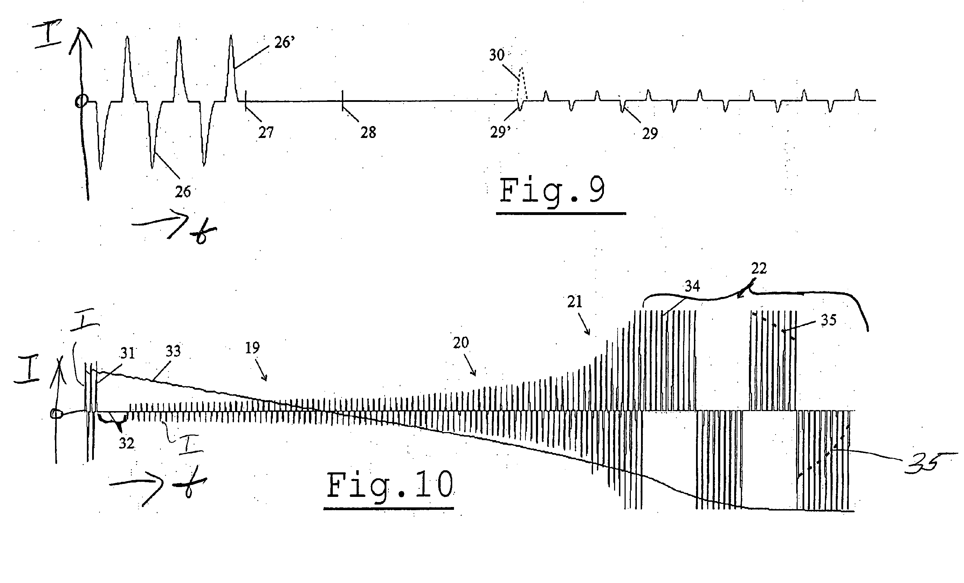

Fig. 9 zeigt eine Aufzeichnung über einen Stromverlauf I durch die Feldwicklung über die Zeit t von angeschnittenen Vollwellen des Spannungssignals des Netzes während eines Überganges vom Motorbetrieb in den Bremsbetrieb. Ein Leerlaufbetrieb des Universalmotors ist durch angeschnittene Vollwellen 26 des Netzes dargestellt. An einer Markierungsstelle 27 ist vom Motorbetrieb in den Bremsbetrieb umgeschaltet worden, und die Umschaltglieder S1, S2; S3, S4; S5, S6; S8 des Geräteschalters haben von den Motorbetriebskontakten abgehoben. An einer Markierungsstelle 28 liegen die Umschaltglieder des Geräteschalters an den Bremsbetriebskontakten an. Die Umschaltglieder besitzen hier somit eine Schaltverzögerung von etwa vier Halbwellen der Netzfrequenz. Abhängig von der gewählten Ausführungsform kann die Schaltverzögerung kürzer oder länger sein.

Innerhalb der Schaltverzögerung der Umschaltglieder schaltet der Controller der Steuerelektronik vom Motorbetrieb in den Bremsbetrieb um. Nach etwa sechs Halbwellen der Netzfrequenz beginnt das Bremsprogramm mit Hilfe des wenigstens einen Triacs 3, v, v', v" mit einem großen Anschnitt der Halbwellen 29', 29 der Wechselspannung des Netzes die Feldwicklung mit einer Wechselspannung zu versorgen, wobei das Bremsprogramm auch früher beginnen kann. Das Programm des Controllers ist so ausgelegt, dass vorzugsweise eine erste Halbwelle 29' der Wechselspannung der Feldwicklung für den Bremsbetrieb eine entgegen gesetzte Polarität aufweist, wie die Polarität der letzten Halbwelle 26' der Wechselspannung der Feldwicklung des Motorbetriebes. Wird der Motorbetrieb mit einer positiven Halbwelle beendet, so beginnt der Bremsbetrieb vorzugsweise mit einer negativen Halbwelle. Wird der Motorbetrieb mit einer negativen Halbwelle beendet, so beginnt der Bremsbetrieb vorzugsweise mit einer positiven Halbwelle. Dieser Halbwellenwechsel ist vorteilhaft, da bei einer gleichen Polarität der Halbwellen während eines Wechsels vom Motorbetrieb in den Bremsbetrieb der Stromfluss der ersten Halbwelle 29' durch die Feldwicklung 2, 2' am Anfang des Bremsbetriebes sehr hoch sein kann, gekennzeichnet durch die gestrichelte Halbwelle 30, und einen nicht unerheblichen Lichtbogen am Kollektor des Ankers verursacht.

Fig. 10 zeigt eine Aufzeichnung über einen Stromverlauf I über die Zeit t in der Feldwicklung 2 während des Bremsbetriebes des Universalmotors. Der Strom wird von der Wechselspannung des Netzes geliefert und stellt einen Wechselstrom dar. Ein Leerlaufbetrieb ist durch einen aufgezeichneten Strom I von angeschnittenen Vollwellen 31 der Netzspannung dargestellt. Zwischen einer Umschaltung vom Motorbetrieb in den Bremsbetrieb liegt mindestens ein Nulldurchgang der Netzspannung. Nach einer Umschaltzeit 32 vom Motorbetrieb in den Bremsbetrieb ist die Stromaufnahme I in der Feldwicklung 2, 2' am Anfang vorzugsweise gering, wobei der Strom I des Netzes im weiteren Verlauf im ersten Bereichsabschnitt 19 vorzugsweise kontinuierlich nur leicht ansteigt und im zweiten Bereichsabschnitt 20 vorzugsweise etwas stärker ansteigt und im dritten Bereichsabschnitt 21 vorzugsweise steil ansteigt, und hierdurch die Drehzahlkurve 33 einen annährend geradlinig abfallenden Verlauf aufweist, wodurch die Drehzahl des Universalmotors während des Bremsbetriebes vorzugsweise kontinuierlich gleichmäßig abnimmt. Dabei weist die Stromaufnahme in der Feldwicklung einen progressiven Verlauf auf. Abhängig von der gewählten Ausführung können auch andere Stromverläufe und Drehzahlverläufe gewählt werden.

Im vierten Bereichsabschnitt 22 erfolgt die Wechselstromaufnahme in der Feldwicklung mit einer niedrigeren Frequenz, wobei positive und negative Halbwellenpakete der Wechselspannung des Netzes an der Feldwicklung anliegen. Ein Halbwellenpaket weist mehrere positive oder negative Spannungspulse mit positivem oder negativem Strom auf. Die Spannungspulse werden durch eine entsprechende Ansteuerung des wenigstens einen Triacs 3 aus der Wechselspannung des Netzes gewonnen, d. h. herausgefiltert. Die Frequenz des Wechsels der Polarität der Bestromung der Feldwicklung mit den Halbwellenpaketen kann beispielsweise halb so groß und kleiner, beispielsweise bis zu einem Zehntel der Netzfrequenz betragen. Während eines Halbwellenpaketes werden mehrere Spannungsimpulse der gleichen Polarität der Netzspannung an die Feldwicklung angelegt. Anschließend werden beim folgenden Halbwellenpaket eine bestimmte Anzahl der Spannungspulse der entgegen gesetzten Polarität der Netzspannung an die Feldwicklung angelegt. Dabei kann ein Halbwellenpaket beispielsweise 2 bis 10 oder mehrere Spannungspulse der gleichen Polarität aufweisen. Die Drehzahl 33 des Universalmotors nimmt während des Bremsbetriebes vorzugsweise gleichmäßig bis hin zu den Halbwellenpaketen 22 kontinuierlich ab. Durch die Halbwellenpakete wird die Drehzahl stärker reduziert und der Motor kommt schnell zum Stillstand. Die Halbwellenpakete wechseln vorzugsweise bei Neueinschaltung des Universalmotors ihre Polaritätsabfolge, indem beispielsweise das erste Halbwellenpaket 34 bei einer Bremsung des Universalmotors positive Halbwellen, und bei einer darauffolgenden Bremsung des Universalmotors negative Halbwellen aufweist. Hierdurch wird eine gleichmäßige Abnutzung der Bürsten des Kommutators des Ankers erzielt.

Weil je nach Beschaffenheit des Universalmotors zum Ende der Bremszeit das induktive Feld am Anker höher sein kann wie das induzierte Feld, kann das anliegende Feld an der Feldwicklung den Anker des Universalmotors zum Ende der Bremszeit antreiben. Daher kann es zweckmäßig sein, die Stromaufnahme der Feldwicklung zum Ende der Bremszeit zu senken, vorzugsweise stark zu senken. Das Absenken des Stromes ist durch eine gestrichelte Linie 35 dargestellt. Die Absenkung der Stromaufnahme kann sich auch über ein, zwei oder mehrere letzte Halbwellenpakete erstrecken. In einer weiteren Ausführungsform kann das Netz vorzeitig abgeschaltet werden.

Um den Bürstenverschleiß bei einem gebremsten Universalmotor noch weiter zu reduzieren, kann die Leerlaufdrehzahl in den Bereich des Nennbetriebes des Universalmotors abgesenkt werden, wobei dem Universalmotor dann eine Drehzahlerfassungseinrichtung zugeordnet ist. Eine Absenkung der Leerlaufdrehzahl ist besonders bei einem Winkelschleifer oder einer Handkreissäge von Vorteil, da hierbei ein sicheres Ansetzen des Werkzeugs erleichtert ist. Sobald das Werkzeug belastet ist, wird das Drehmoment entsprechend der Belastung des Werkzeugs nachgesteuert.

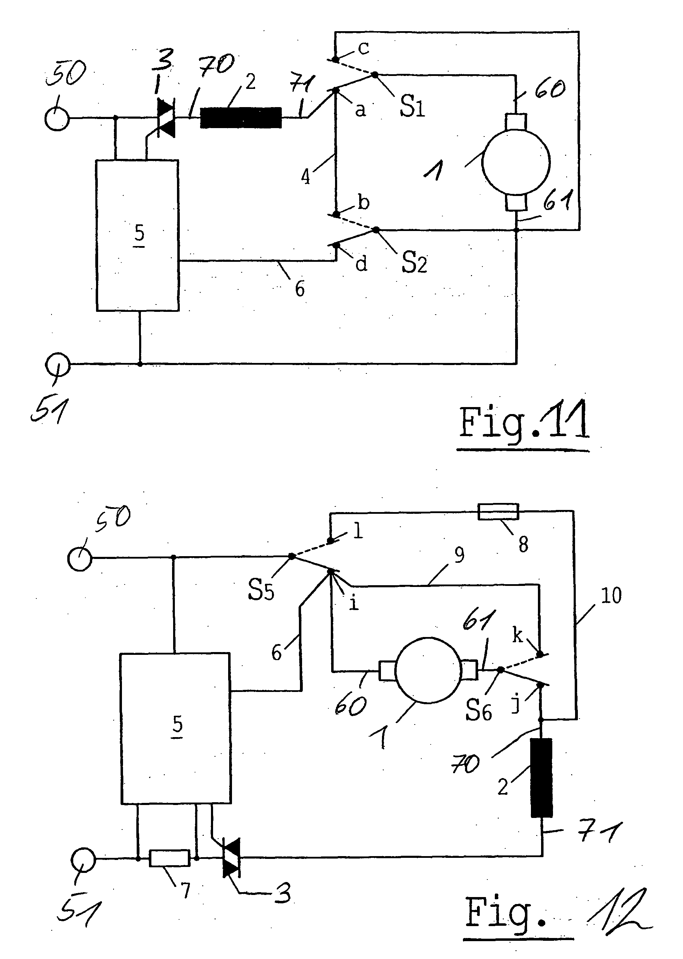

Fig. 11 zeigt eine weitere Ausführungsform der Schaltungsanordnung, bei der ein Triac 3 mit einem ersten Netzanschluss 50 und mit einem ersten Anschluss 70 einer Feldwicklung 2 verbunden ist, und ein zweiter Anschluss 71 der Feldwicklung 2 führt zu einem Motorbetriebskontakt a eines ersten Umschaltgliedes S1, und ein erster Anschluss 60 eines Ankers 1 führt zum ersten Umschaltglied S1, wobei ein Bremsbetriebskontakt b des zweiten Umschaltgliedes S2 durch eine Brücke 4 mit dem Motorbetriebskontakt a des ersten Umschaltgliedes S1 verbunden ist. Dem Triac 3 ist eine Steuerelektronik 5 zugeordnet. Damit die Steuerelektronik 5 erkennen kann, wann über die Umschaltglieder S1, S2 ein Motorbetrieb oder ein Bremsbetrieb geschaltet ist, führt von einem Erkennungskontakt d des zweiten Umschalgliedes S2 eine Leitung 6 zu der Steuerelektronik 5. Zudem ist ein Bremskontakt c des ersten Umschaltgliedes S1 mit einem zweiten Anschluss 61 des Ankers 1 verbunden. Der zweite Anschluss 61 des Ankers 1 ist an den zweiten Netzanschluss 51 angeschlossen.

Bei der Schaltungsanordnung der Fig. 11 ist der Triac 3 einem Universalmotor vorgeschaltet. Der Triac 3 kann dem Universalmotor auch nachgeschaltet sein.

Fig. 12 zeigt eine weitere Ausführung der Schaltungsanordnung. Der erste Netzanschluss 50 führt zu einem ersten Umschaltglied S5 und der erste Anschluss 60 des Ankers 1 ist mit einem Motorbetriebskontakt i des ersten Umschaltgliedes S5 verbunden, wobei der zweite Anschluss des Ankers 1 mit einem zweiten Umschaltglied S6 verbunden ist, und der erste Anschluss 70 der Feldwicklung 2 ist mit einem Motorbetriebskontakt j des zweiten Umschaltgliedes S6 verbunden, wobei der zweite Anschluss 71 der Feldwicklung 2 über einen Triac 3 zum zweiten Netzanschluss 51 führt. Ein Bremsbetriebskontakt k des zweiten Umschaltgliedes S6 ist über eine Brücke 9 mit dem Motorbetriebskontakt i des ersten Umschaltgliedes S5 verbunden, und der Motorbetriebskontakt j des zweiten Umschaltgliedes S6 ist über eine Brücke 10 mit einem Bremsbetriebskontakt I des ersten Umschaltgliedes S5 verbunden. Der Motorbetriebskontakt i des ersten Umschaltgliedes S5 ist hier auch gleichzeitig in Erkennungskontakt, woran die Leitung 6 der Steuerelektronik 5 zur Erkennung der Schalterstellung angeschlossen ist.

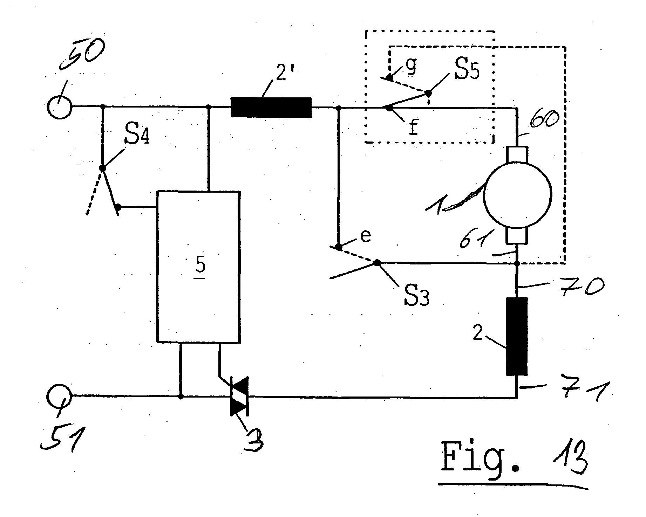

Fig. 13 zeigt eine weitere Schaltungsanordnung. Der eine Teil der Feldwicklung 2' ist mit dem ersten Netzanschluss 50 verbunden, und der andere Teil der Feldwicklung 2 ist über den Triac 3 mit dem zweiten Netzanschluss 51 verbunden. Dem Anker 1 ist ein Schaltglied S3 parallel geschaltet, wobei an dem ersten Anschluss 60 des Ankers 1 der Bremsbetriebskontakt e, an dem zweiten Anschluss 61 des Ankers 1 das Umschaltglied S3 angeschlossen ist.

Zur Erkennung des Motorbetriebes und des Bremsbetriebes ist der Steuerelektronik 5 ein Schaltglied S4 zugeordnet, das direkt mit dem ersten Netzanschluss 50 verbunden ist. Die in den Schaltungsanordnungen dargestellten Schaltglieder der Schaltungsanordnungen werden synchron betätigt.

Bei der Schaltungsanordnung der Fig. 13 kann der Motorbetrieb beim Versagen des Triacs 3 nicht abgeschaltet werden, wenn während des Bremsbetriebes eine Sicherung mit der Feldwicklung in Reihe geschaltet ist, und die Sicherung durchbrennt.

Eine mechanische Abschaltung des Motorbetriebs ist auch bei einer in Reihe mit der Feldwicklung geschalteten Sicherung ermöglicht, wenn hierfür dem Anker 1 ein Umschaltglied S5 zugeordnet ist. Der eine Teil der Feldwicklung 2' ist dann am Motorbetriebskontakt f des Umschaltgliedes S5 angeschlossen, und der Motorbetriebskontakt f des Umschaltgliedes S5 ist über eine Brücke mit dem Bremsbetriebskontakt e des Schaltgliedes S3 verbunden, wobei das Umschaltglied S5 an dem ersten Anschluss 60 des Ankers 1 angeschlossen ist, und der Bremsbetriebskontakt g des Umschaltgliedes S5 ist an den zweiten Anschluss 61 des Ankers 1 angeschlossen.

Die Steuerelektronik 5 ist in den Schaltungsanordnungen der Figuren 1 bis 4 und 11 bis 13 mit den Triacs 3, v, v', v", 1 verbunden. Die Steuerelektronik 5 steuert den Stromfluss durch die Triacs gemäß den abgelegten Tabellen und/oder Diagrammen. Die Steuerung der Triacs kann beispielsweise abhängig von der Zeit und/oder abhängig von der Drehzahl des Ankers und/oder abhängig von der Stromstärke des Stromes durch die Feldwicklung im Bremsbetrieb erfolgen. Ein Triac stellt einen steuerbaren Schalter dar.

In einer weiteren Ausführungsform wird der Anker 1 nach dem Umschalten in den Bremsbetrieb durch ein Umschalten der entsprechenden Umschaltglieder beidseitig vom Netz getrennt.

In einer weiteren Ausführung wird die Steuerkurve der Phasenanschnittwinkelkurve 26, sowie die Regeldaten des Stromsollwertes der Stromsollwertkurve 27, jeweils mit einer Tabelle oder einer mathematischen Funktion des Programms des Controllers gebildet.

In einer weiteren Ausführung ist nach dem Umschalten in den Bremsbetrieb die Stromaufnahme in der Feldwicklung 2 geringer als die Stromaufnahme in der Leerlaufdrehzahl des Motors.

In einer weiteren Ausführung ist die Zeitverzögerung für den Beginn des Bremsprogramms durch die Steuerelektronik 5 größer als die Verzögerung der Umschaltglieder.

In einer weiteren Ausführung betrifft die Erfindung eine elektrodynamische Bremseinrichtung für einen Universalmotor mit einer Feldwicklung 2 und einem Anker 3 und mit einer Schaltungsanordnung mit wenigstens einem Teil der folgenden Merkmale: mit mindestens einem Triac 1 und einer Steuerelektronik 5 mit einem Controller und mit einem Geräteschalter mit Umschaltgliedern zum Umschalten von einem Motorbetrieb in einen Bremsbetrieb, wobei während des Bremsbetriebes die Feldwicklung 2 aus einem Netz gespeist wird, und der Anker 3 kurzgeschlossen ist, und der Controller ein Programm zur Steuerung des Motorbetriebes und des Bremsbetriebes beinhaltet, und das Programm des Controllers zur Reduzierung eines Bürstenfeuers während des Bremsbetriebes so ausgelegt ist,
- dass bei einer Anordnung eines Geräteschalters mit nicht verzögerten Umschaltgliedern S3, S4 zum sicheren Erkennen der Schalterstellung die Schaltungsanordnung einen weiteren Triac 1' beinhaltet, wobei der erste Triac 1 für den Motorbetrieb und der zweite Triac 1' für den Bremsbetrieb bestimmt ist,
- dass nach einem Umschalten in den Bremsbetrieb und somit in einer Ausschaltstellung des Geräteschalters der Anker 3 durch die nicht verzögerten Umschaltglieder S3, S4 kurzgeschlossen ist, und der Anker durch die Umschaltglieder S3, S4 beidseitig vom Netz getrennt ist,
- dass nach dem Umschalten in den Bremsbetrieb ein Bremsprogramm des Controllers der Steuerelektronik 5 aktiviert ist, womit der zweite Triac 1' angesteuert wird,
- dass während des Bremsbetriebes die Feldwicklung 2 über den zweiten Triac 1' erregt ist und nach einem Beenden des Bremsprogramms die Feldwicklung 2 durch den zweiten Triac 1' vom Netz getrennt ist.

In einer weiteren Ausführung wird über einen Shunt 7 während des Bremsbetriebes ein Iststromwert, bestehend aus einem Wirkstrom und einem Blindstrom des Motors, für den Stromregler der Steuerelektronik 5 ermittelt, und die Stromsollwertkurve 27 wird durch den Stromregler mit der Phasenanschnittwinkelkurve 26 erreicht, oder die Stromsollwertkurve 27 wird direkt mit dem Stromregler erreicht, indem dem Stromregler am Anfang des Bremsbetriebes ein Phasenanschnittwinkel vorgegeben ist.

## Patentansprüche

1. Elektrodynamische Bremseinrichtung für einen Universalmotor mit einer Feldwicklung (2, 2') und einem Anker (1), mit einer Einrichtung (S1-S6, S8, 3, v, v', v") zum Umschalten von einem Motorbetrieb in einen Bremsbetrieb, wobei die Einrichtung ausgebildet ist, um während des Motorbetriebes den Anker (1) und die Feldwicklung (2, 2') mit einem Wechselstrom eines Netzes (50, 51) zu versorgen,
wobei die Einrichtung ausgebildet ist, um während des Bremsbetriebes den Anker (1) kurz zu schließen und die Feldwicklung (2, 2') weiterhin mit einer Wechselspannung aus dem Netz (50, 51) zu versorgen,
wobei die Einrichtung ausgebildet ist, um in einer ersten Phase, insbesondere einer Anfangsphase des Bremsbetriebes, die Feldwicklung (2, 2') mit einem Strom mit einer Wechselspannung mit der Frequenz des Netzes zu versorgen, und
wobei die Einrichtung ausgebildet ist, um in einer weiteren Phase des Bremsbetriebes insbesondere nach der Anfangsphase die Feldwicklung (2, 2') mit einer Wechselspannung mit einer gegenüber der Frequenz des Netzes reduzierten Frequenz aus dem Stromnetz zu versorgen.

2. Bremseinrichtung nach Anspruch 1, wobei die Einrichtung ausgebildet ist, um in der weiteren Phase die Feldwicklung mit Halbwellenpaketen von jeweils mehreren Spannungspulsen gleicher Polarität des Netzes zu versorgen, wobei die Polarität der Spannungspulse von einem Halbwellenpaket zu einem folgenden Halbwellenpaket wechselt.

3. Bremseinrichtung nach Anspruch 2, wobei die Einrichtung ausgebildet ist, um die Spannungspulse des wenigstens ersten Halbwellenpaketes ohne Strombegrenzung von dem Netz an die Feldwicklung anzulegen.

4. Bremseinrichtung nach Anspruch 2, wobei die Einrichtung ausgebildet ist, den Strom der Spannungspulse der Halbwellenpakete abhängig von vorgegebenen Parametern zu steuern.

5. Bremseinrichtung nach Anspruch 4, wobei die Einrichtung ausgebildet ist, den Strom der Spannungspulse in wenigstens einem Halbwellenpaket in zeitlich nacheinander folgenden Spannungspulsen von Spannungspuls zu Spannungspuls zu senken.

6. Bremseinrichtung nach einem der Ansprüche 1 bis 4, wobei die Einrichtung ausgebildet ist, um den Strom durch die Feldwicklung während der Anfangsphase des Bremsbetriebes anhand einer Stromsollwertkurve insbesondere mit einer Phasenanschnittwinkelkurve zu steuern oder zu regeln.

7. Bremseinrichtung nach einem der Ansprüche 1 bis 5, wobei die Einrichtung ausgebildet ist, um das Umschalten vom Motorbetrieb zum Bremsbetrieb in der Weise auszuführen, dass ein Nulldurchgang der Wechselspannung des Stromnetzes erfolgt, so dass eine erste Halbwelle des Bremsbetriebes eine entgegen gesetzte Polarität wie eine letzte Halbwelle des Motorbetriebes aufweist.

8. Bremseinrichtung nach einem der Ansprüche 1 bis 6, wobei die Einrichtung ausgebildet ist, um bei aufeinander folgenden Bremsbetrieben die Polarität der ersten Halbwelle zu wechseln.

9. Bremseinrichtung nach einem der Ansprüche 1 bis 8, wobei die Einrichtung ausgebildet ist, um in der Anfangsphase des Bremsbetriebes wenigstens zwei Abschnitte mit unterschiedlich hohen Strömen durch die Feldwicklung einzustellen.

10. Bremseinrichtung nach Anspruch 9, wobei die Einrichtung ausgebildet ist, um in einem ersten Abschnitt der Anfangsphase einen mit der Zeit leicht ansteigenden Strom durch die Feldwicklung einzustellen, um in einem folgenden zweiten Abschnitt einen mit der Zeit stärker als im ersten Abschnitt ansteigenden Strom durch die Feldwicklung einzustellen, um in einem folgenden dritten Abschnitt der Anfangsphase einen stärker als im zweiten Abschnitt ansteigenden Strom durch die Feldwicklung einzustellen, um vorzugsweise eine geradlinig abfallende Drehzahlkurve des Ankers zu erreichen.

11. Bremseinrichtung nach einem der Ansprüche 1 bis 10, wobei die Einrichtung eine zum Erkennen eines Motorbetriebes oder eines Bremsbetriebes eine Erkennungsverbindung (6) zu einem Umschaltglied (S1, S2, S3, S4, S5, S8) aufweist, wobei mit dem Umschaltglied (S1, S2, S3, S4, S5, S8) eine elektrisch leitende Verbindung zwischen dem Anker (1) und der Feldwicklung (2) oder dem Anker (1) und/oder der Feldwicklung (2) und dem Netz (50, 51) hergestellt oder unterbrochen werden kann.

12. Bremseinrichtung nach einem der Ansprüche 1 bis 11, wobei die Einrichtung wenigstens einen Schalter, insbesondere ein Umschaltglied (S1) aufweist, mit dem eine elektrisch leitende Verbindung zwischen den Anschlüssen des Ankers (1) und/oder zwischen dem Anker (1) und der Feldwicklung (2) und/oder zwischen dem Anker (1) und/oder der Feldwicklung (2) und Anschlüssen des Netzes (50, 51) hergestellt oder unterbrochen werden kann, um von dem Motorbetrieb in den Bremsbetrieb zu schalten, wobei die Schalter (S1-S8) eine Schaltverzögerung von mindestens einer Halbwelle der Wechselspannung des Netzes aufweist.

13. Bremseinrichtung nach einem der Ansprüche 1 bis 12, wobei die Einrichtung eine Steuerelektronik (5) aufweist, wobei die Steuerelektronik über einen Erkennungsanschluss (6) während des Motorbetriebes über ein Umschaltglied (S1-S6, S8) direkt mit einem Netzanschluss (50) verbunden ist oder über ein Umschaltglied (S1-S6, S8) und der Feldwicklung (2) mit einem Netzanschluss (51) verbunden ist, wobei der Anker (1) nach einem Umschalten vom Motorbetrieb in den Bremsbetrieb durch zwei Umschaltglieder (S1, S2; S3, S4) beidseitig vom Netz (50, 51) getrennt ist, wobei und nach dem Beenden des Bremsbetriebs die Feldwicklung (2) durch einen Schalter (3) vom Stromnetz getrennt wird.

14. Bremseinrichtung nach einem der Ansprüche 1 bis 11, wobei für eine beidseitige mechanische Trennung des Ankers mit nicht verzögerten Umschaltern (S3, S4) drei weitere Schalter vorgesehen sind (v,v',v"), wobei ein erster Schalter (v) während des Motorbetriebes über einen ersten Umschalter (S3) in Reihe mit dem Universalmotor (1, 2) geschaltet ist, wobei ein zweiter Schalter (v') während des Bremsbetriebes über einen zweiten Umschalter (S4) in Reihe mit der Feldwicklung (2) geschaltet ist, und wobei ein dritter Schalter (v") in einer Kurzschlussbrücke (w) zwischen den Anschlüssen (60, 61) des Ankers (1) geschaltet ist.

15. Verfahren zum Bremsen eines Universalmotor mit einer Feldwicklung und einem Anker, wobei der Universalmotor von einem Motorbetrieb in einen Bremsbetrieb geschaltet werden kann,
wobei während des Motorbetriebes der Anker und die Feldwicklung mit einem Wechselstrom eines Stromnetzes versorgt werden,
wobei während des Bremsbetriebes den Anker kurz geschlossen wird und die Feldwicklung weiterhin mit einer Wechselspannung aus dem Stromnetz versorgt wird,
wobei in einer Anfangsphase des Bremsbetriebes die Feldwicklung mit einer Wechselspannung mit der Frequenz des Stromnetzes versorgt wird, und wobei nach der Anfangsphase des Bremsbetriebes in einer weiteren Phase des Bremsbetriebes die Feldwicklung mit einer Wechselspannung mit einer gegenüber der Frequenz des Stromnetzes reduzierten Frequenz aus dem Stromnetz versorgt wird.

16. Verfahren nach Anspruch 15, wobei in der weiteren Phase die Feldwicklung mit Halbwellenpaketen von jeweils mehreren Spannungspulsen gleicher Polarität des Stromnetzes versorgt wird, wobei die Polarität der Spannungspulse von Halbwellenpaket zu Halbwellenpaket wechselt.

17. Verfahren nach Anspruch 16, wobei die Spannungspulse des wenigstens ersten Halbwellenpaketes ohne Strombegrenzung an die Feldwicklung angelegt werden.

18. Verfahren nach Anspruch 16 oder 17, wobei der Strom der Spannungspulse der Halbwellenpakete abhängig von vorgegebenen Parametern gesteuert oder geregelt wird.

19. Verfahren nach Anspruch 18, wobei der Strom der Spannungspulse in wenigstens einem Halbwellenpaket in zeitlich nacheinander folgenden Spannungspulsen von Spannungspuls zu Spannungspuls gesenkt wird.

20. Verfahren nach einem der Ansprüche 15 bis 19, wobei der Strom durch die Feldwicklung während der Anfangsphase des Bremsbetriebes anhand einer Stromsollwertkurve insbesondere mit einer Phasenanschnittwinkelkurve gesteuert oder geregelt wird.

21. Verfahren nach einem der Ansprüche 15 bis 20, wobei das Umschalten vom Motorbetrieb zum Bremsbetrieb in der Weise ausgeführt wird, dass zwischen dem Wechsel vom Motorbetrieb in den Bremsbetrieb ein Nulldurchgang der Wechselspannung des Stromnetzes erfolgt, so dass eine erste Halbwelle des Bremsbetriebes eine entgegen gesetzte Polarität wie eine letzte Halbwelle des Motorbetriebes aufweist.

22. Verfahren nach einem der Ansprüche 15 bis 21, wobei bei aufeinander folgenden Bremsbetrieben die Polarität der ersten Halbwelle des Bremsbetriebes gewechselt wird.

23. Verfahren nach einem der Ansprüche 15 bis 22, wobei in der Anfangsphase des Bremsbetriebes wenigstens zwei Abschnitte mit unterschiedlich hohen Strömen durch die Feldwicklung eingestellt werden.

24. Verfahren nach Anspruch 23, wobei in einem ersten Abschnitt der Anfangsphase ein mit der Zeit leicht ansteigender Strom durch die Feldwicklung eingestellt wird, wobei in einem folgenden zweiten Abschnitt ein mit der Zeit stärker als im erste Abschnitt ansteigender Strom durch die Feldwicklung eingestellt wird, und wobei in einem folgenden dritten Abschnitt der Anfangsphase ein im Vergleich zum zweiten Abschnitt stärker ansteigender Strom durch die Feldwicklung eingestellt wird, um vorzugsweise eine geradlinig abfallende Drehzahlkurve des Ankers zu erreichen.

## Claims

1. Electrodynamic braking device for a universal motor with a field winding (2, 2') and an armature (1), having a device (S1-S6, S8, 3, v, v', v") for changing over from a motor mode to a braking mode, the device being designed to supply the armature (1) and the field winding (2, 2') with an alternating current from a power supply (50, 51) during the motor mode,
the device being designed to short-circuit the armature (1) and to continue to supply the field winding (2, 2') with an AC voltage from the power supply (50, 51) during the braking mode,
the device being designed to supply the field winding (2, 2') with a current with an AC voltage at the frequency of the power supply in a first phase, in particular an initial phase of the braking mode, and
the device being designed to supply the field winding (2, 2') from the power supply system with an AC voltage at a frequency which is reduced in comparison with the frequency of the power supply in a further phase of the braking mode, in particular after the initial phase.

2. Braking device according to Claim 1, the device being designed to supply the field winding with half-cycle packets of a respective plurality of voltage pulses of the same polarity of the power supply in the further phase, the polarity of the voltage pulses changing from one half-cycle packet to a following half-cycle packet.

3. Braking device according to Claim 2, the device being designed to apply the voltage pulses of the at least first half-cycle packet to the field winding without current limitation by the power supply.

4. Braking device according to Claim 2, the device being designed to control the current of the voltage pulses of the half-cycle packets on the basis of predefined parameters.

5. Braking device according to Claim 4, the device being designed to reduce the current of the voltage pulses in at least one half-cycle packet from voltage pulse to voltage pulse in temporally successive voltage pulses.

6. Braking device according to one of Claims 1 to 4, the device being designed to control or regulate the current through the field winding during the initial phase of the braking mode using a current desired value curve, in particular with a phase gating angle curve.

7. Braking device according to one of Claims 1 to 5, the device being designed to change over from the motor mode to the braking mode in such a manner that a zero crossing of the AC voltage of the power supply system is effected such that a first half-cycle of the braking mode has an opposite polarity to a last half-cycle of the motor mode.

8. Braking device according to one of Claims 1 to 6, the device being designed to change the polarity of the first half-cycle during successive braking modes.

9. Braking device according to one of Claims 1 to 8, the device being designed to set at least two sections with different currents through the field winding in the initial phase of the braking mode.

10. Braking device according to Claim 9, the device being designed to set a current through the field winding that increases slightly with time in a first section of the initial phase, to set a current through the field winding that increases to a greater extent than in the first section in a following, second section, to set a current through the field winding that increases to a greater extent than in the second section in a following, third section of the initial phase in order to preferably achieve a linearly falling speed curve of the armature.

11. Braking device according to one of Claims 1 to 10, the device having a detection link (6) to a changeover element (81, S2, S3, S4, S5, S8) in order to detect a motor mode or a braking mode, the changeover element (81, S2, S3, S4, S5, S8) being able to be used to establish or interrupt an electrically conductive link between the armature (1) and the field winding (2) or the armature (1) and/or the field winding (2) and the power supply (50, 51) .

12. Braking device according to one of Claims 1 to 11, the device having at least one switch, in particular a changeover element (S1), which can be used to establish or interrupt an electrically conductive link between the connections of the armature (1) and/or between the armature (1) and the field winding (2) and/or between the armature (1) and/or the field winding (2) and connections of the power supply (50, 51) in order to switch from the motor mode to the braking mode, the switches (S1-S8) having a switching delay of at least one half-cycle of the AC voltage of the power supply.

13. Braking device according to one of Claims 1 to 12, the device having control electronics (5), the control electronics being directly connected, via a detection connection (6), to a power supply connection (50) via a changeover element (S1-S6, S8 ) during the motor mode or being connected to a power supply connection (51) via a changeover element (S1-S6, S8) and the field winding (2), the armature (1) being disconnected from the power supply (50, 51) on both sides by two changeover elements (S1, S2; S3, S4) after changing over from the motor mode to the braking mode, and the field winding (2) being disconnected from the power supply system by a switch (3) after the end of the braking mode.

14. Braking device according to one of Claims 1 to 11, three further switches (v, v', v") being provided for mechanical disconnection of the armature on both sides with non-delayed changeover switches (S3, S4), a first switch (v) being connected in series with the universal motor (1, 2) via a first changeover switch (S3) during the motor mode, a second switch (v') being connected in series with the field winding (2) via a second changeover switch (S4) during the braking mode, and a third switch (v") being connected in a short-circuiting bridge (w) between the connections (60, 61) of the armature (1).

15. Method for braking a universal motor with a field winding and an armature, the universal motor being able to be switched from a motor mode to a braking mode,
the armature and the field winding being supplied with an alternating current from a power supply system during the motor mode,
the armature being short-circuited and the field winding continuing to be supplied with an AC voltage from the power supply system during the braking mode,
the field winding being supplied with an AC voltage at the frequency of the power supply system in an initial phase of the braking mode, and
the field winding being supplied from the power supply system with an AC voltage at a frequency which is reduced in comparison with the frequency of the power supply system after the initial phase of the braking mode in a further phase of the braking mode.

16. Method according to Claim 15, the field winding being supplied with half-cycle packets of a respective plurality of voltage pulses of the same polarity of the power supply system in the further phase, the polarity of the voltage pulses changing from half-cycle packet to half-cycle packet.

17. Method according to Claim 16, the voltage pulses of the at least first half-cycle packet being applied to the field winding without current limitation.

18. Method according to Claim 16 or 17, the current of the voltage pulses of the half-cycle packets being controlled or regulated on the basis of predefined parameters.

19. Method according to Claim 18, the current of the voltage pulses being reduced in at least one half-cycle packet from voltage pulse to voltage pulse in temporally successive voltage pulses.

20. Method according to one of Claims 15 to 19, the current through the field winding being controlled or regulated during the initial phase of the braking mode using a current desired value curve, in particular with a phase gating angle curve.

21. Method according to one of Claims 15 to 20, a changeover being made from the motor mode to the braking mode in such a manner that a zero crossing of the AC voltage of the power supply system is effected between the change from the motor mode to the braking mode such that a first half-cycle of the braking mode has an opposite polarity to a last half-cycle of the motor mode.

22. Method according to one of Claims 15 to 21, the polarity of the first half-cycle of the braking mode being changed during successive braking modes.

23. Method according to one of Claims 15 to 22, at least two sections with different currents through the field winding being set in the initial phase of the braking mode.

24. Method according to Claim 23, a current through the field winding that increases slightly with time being set in a first section of the initial phase, a current through the field winding that increases to a greater extent with time than in the first section being set in a following, second section, and a current through the field winding that increases to a greater extent in comparison with the second section being set in a following, third section of the initial phase in order to preferably achieve a linearly falling speed curve of the armature.

## Revendications

1. Dispositif de freinage électrodynamique pour un moteur universel, comprenant un enroulement de champ (2, 2') et un induit (1), un dispositif (S1-S6, S8, 3, v, v', v") pour l'inversion d'un mode moteur à un mode de freinage, le dispositif étant réalisé pour alimenter l'induit (1) et l'enroulement de champ (2, 2') en courant alternatif d'un réseau (50, 51) pendant le mode moteur,
le dispositif étant réalisé pour court-circuiter l'induit (1) pendant le mode de freinage et pour alimenter l'enroulement de champ (2, 2') en outre avec une tension alternative provenant du réseau (50, 51),
le dispositif étant réalisé pour alimenter dans une première phase, notamment une phase initiale du mode de freinage, l'enroulement de champ (2, 2') en courant avec une tension alternative à la fréquence du réseau, et
le dispositif étant réalisé pour alimenter dans une deuxième phase du mode de freinage, en particulier après la phase initiale, l'enroulement de champ (2, 2') avec une tension alternative à une fréquence provenant du réseau, réduite par rapport à la fréquence du réseau.

2. Dispositif de freinage selon la revendication 1, dans lequel le dispositif est réalisé pour alimenter, dans la phase supplémentaire, l'enroulement de champ avec des paquets de demi-ondes de plusieurs impulsions de tension respectives de même polarité du réseau, la polarité des impulsions de tension alternant d'un paquet de demi-ondes à un autre paquet de demi-ondes suivant.

3. Dispositif de freinage selon la revendication 2, dans lequel le dispositif est réalisé pour appliquer les impulsions de tension de l'au moins un premier paquet de demi-ondes sans limitation de courant du réseau à l'enroulement de champ.

4. Dispositif de freinage selon la revendication 2, dans lequel le dispositif est réalisé pour commander le courant de la bobine de tension des paquets de demi-ondes en fonction de paramètres prédéfinis.

5. Dispositif de freinage selon la revendication 4, dans lequel le dispositif est réalisé pour abaisser le courant des impulsions de tension dans au moins un paquet de demi-ondes dans des impulsions de tension successives d'une impulsion de tension à une autre.

6. Dispositif de freinage selon l'une quelconque des revendications 1 à 4, dans lequel le dispositif est réalisé pour commander ou réguler le courant à travers l'enroulement de champ pendant la phase initiale du mode de freinage à l'aide d'une courbe de valeurs de consigne du courant en particulier avec une courbe d'angle de commande de phase.

7. Dispositif de freinage selon l'une quelconque des revendications 1 à 5, dans lequel le dispositif est réalisé pour réaliser l'inversion du mode moteur au mode de freinage de telle sorte qu'il se produise un passage par zéro de la tension alternative du réseau, de sorte qu'une première demi-onde du mode de freinage présente une polarité opposée à une dernière demi-onde du mode moteur.

8. Dispositif de freinage selon l'une quelconque des revendications 1 à 6, dans lequel le dispositif est réalisé pour alterner la polarité de la première demi-onde dans le cas de modes de freinage successifs.

9. Dispositif de freinage selon l'une quelconque des revendications 1 à 8, dans lequel le dispositif est réalisé pour ajuster dans la phase initiale du mode de freinage au moins deux portions de courants d'intensités différentes à travers l'enroulement de champ.

10. Dispositif de freinage selon la revendication 9, dans lequel le dispositif est réalisé pour ajuster dans une première portion de la phase initiale un courant à travers l'enroulement de champ augmentant légèrement au cours du temps, afin d'ajuster dans une deuxième portion suivante un courant à travers l'enroulement de champ augmentant plus fortement que dans la première portion, afin d'ajuster dans une troisième portion suivante de la phase initiale un courant à travers l'enroulement de champ augmentant plus fortement que dans la deuxième portion, afin d'atteindre de préférence une courbe de régime de l'induit diminuant de manière linéaire.

11. Dispositif de freinage selon l'une quelconque des revendications 1 à 10, dans lequel le dispositif présente pour la détection d'un mode moteur ou d'un mode de freinage une connexion de détection (6) à un organe d'inversion (81, S2, S3, S4, S5, S8), une connexion électrique entre l'induit (1) et l'enroulement de champ (2) ou entre l'induit (1) et/ou l'enroulement de champ (2) et le réseau (50, 51) pouvant être établie ou interrompue au moyen de l'organe d'inversion (81, S2, S3, S4, S5, S8).

12. Dispositif de freinage selon l'une quelconque des revendications 1 à 11, dans lequel le dispositif présente au moins un commutateur, en particulier un organe d'inversion (S1), avec lequel une connexion électrique entre les raccords de l'induit (1) et/ou entre l'induit (1) et l'enroulement de champ (2) et/ou entre l'induit (1) et/ou l'enroulement de champ (2) et des raccords du réseau (50, 51) peut être établie ou interrompue, afin de commuter du mode moteur au mode de freinage, les commutateurs (S1-S8) présentant un retard de commutation d'au moins une demi-onde de la tension alternative du réseau.

13. Dispositif de freinage selon l'une quelconque des revendications 1 à 12, dans lequel le dispositif présente une électronique de commande (5), l'électronique de commande étant connectée par le biais d'un raccord de détection (6) pendant le mode moteur par le biais d'un organe d'inversion (S1-S6, S8) directement à un raccord de réseau (50) ou par le biais d'un organe d'inversion (S1-S6, S8) et de l'enroulement de champ (2) à un raccord de réseau (51), l'induit (1) après une inversion du mode moteur au mode de freinage étant séparé du réseau (50, 51) des deux côtés par deux organes d'inversion (81, S2 ; S3, S4), et après la fin du mode de freinage, l'enroulement de champ (2) étant séparé du réseau par un commutateur (3).

14. Dispositif de freinage selon l'une quelconque des revendications 1 à 11, dans lequel, pour une séparation mécanique de l'induit des deux côtés avec des inverseurs non retardés (S3, S4), trois commutateurs supplémentaires sont prévus (v, v', v"), un premier commutateur (v) étant monté en série avec le moteur universel (1, 2) par le biais d'un premier inverseur (S3), un deuxième commutateur (v') étant monté en série avec l'enroulement de champ (2) pendant le mode de freinage par le biais d'un deuxième inverseur (S4), et un troisième commutateur (v") étant monté dans un pont de court-circuitage (w) entre les raccords (60, 61) de l'induit (1).

15. Procédé de freinage d'un moteur universel et d'un induit, dans lequel le moteur universel peut être commuté d'un mode moteur dans un mode de freinage, pendant le mode moteur, l'induit et l'enroulement de champ étant alimentés avec un courant alternatif d'un réseau,
pendant le mode de freinage, l'induit étant court-circuité et l'enroulement de champ étant alimenté en outre avec une tension alternative du réseau, dans une phase initiale du mode de freinage, l'enroulement de champ étant alimenté avec une tension alternative à la fréquence du réseau, et après la phase initiale du mode de freinage dans une phase supplémentaire du mode de freinage l'enroulement de champ étant alimenté avec une tension alternative à une fréquence provenant du réseau réduite par rapport à la fréquence du réseau.

16. Procédé selon la revendication 15, dans lequel, dans la phase supplémentaire, l'enroulement de champ est alimenté avec de paquets de demi-ondes de plusieurs impulsions de tension respectives de même polarité du réseau, la polarité des impulsions de tension alternant d'un paquet de demi-ondes à un autre.

17. Procédé selon la revendication 16, dans lequel les impulsions de tension de l'au moins un premier paquet de demi-ondes sont appliquées sans limitation de courant à l'enroulement de champ.

18. Procédé selon la revendication 16 ou 17, dans lequel le courant des impulsions de tension des paquets de demi-ondes est commandé ou régulé en fonction de paramètres prédéfinis.

19. Procédé selon la revendication 18, dans lequel le courant des impulsions de tension est abaissé dans au moins un paquet de demi-ondes dans des impulsions de tension successives d'une impulsion de tension à une autre.

20. Procédé selon l'une quelconque des revendications 15 à 19, dans lequel le courant à travers l'enroulement de champ pendant la phase initiale du mode de freinage est commandé ou régulé à l'aide d'une courbe de valeurs de consigne du courant en particulier avec une courbe d'angle de commande de phase.

21. Procédé selon l'une quelconque des revendications 15 à 20, dans lequel l'inversion du mode moteur au mode de freinage est réalisée de telle sorte qu'il se produise un passage par zéro de la tension alternative du réseau, entre le passage du mode moteur au mode de freinage de sorte qu'une première demi-onde du mode de freinage présente une polarité opposée à une dernière demi-onde du mode moteur.

22. Procédé selon l'une quelconque des revendications 15 à 21, dans lequel la polarité de la première demi-onde du mode de freinage est alternée dans le cas de modes de freinage successifs.

23. Procédé selon l'une quelconque des revendications 15 à 22, dans lequel, dans la phase initiale du mode de freinage, au moins deux portions de courants d'intensités différentes sont ajustées à travers l'enroulement de champ.

24. Procédé selon la revendication 23, dans lequel dans une première portion de la phase initiale un courant est ajusté à travers l'enroulement de champ de manière à augmenter légèrement au cours du temps, dans une deuxième portion suivante un courant est ajusté à travers l'enroulement de champ de manière à augmenter plus fortement que dans la première portion, dans une troisième portion suivante de la phase initiale un courant est ajusté à travers l'enroulement de champ de manière à augmenter plus fortement que dans la deuxième portion, afin d'atteindre de préférence une courbe de régime de l'induit diminuant de manière linéaire.
